# EUROPÄISCHE PATENTSCHRIFT

(11) **EP 0 347 713 B1**
(45) Veröffentlichungstag und Bekanntmachung des Hinweises auf die Patenterteilung: **01.09.1993**
(21) Anmeldenummer: 89110649.4
(22) Anmeldetag: 13.06.1989
(51) Int. Cl.: H04N 5/63

(54) **Einrichtung zur Stromversorgung eines Fernsehgerätes**
Power supply circuit for television receiver
Dispositif d'alimentation pour un récepteur de télévision

(30) Priorität: 23.06.1988 DE 3821114
(43) Veröffentlichungstag der Anmeldung: 27.12.1989
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Rohrbacher, Josef Grundig E.M.V., D-8510 Fürth/Bay. (DE)

(56) Entgegenhaltungen:
- DE-A- 3 615 610
- GB-A- 2 088 656
- US-A- 3 049 591
- US-A- 3 521 142
- US-A- 4 122 396

## Beschreibung

Die Erfindung betrifft eine Einrichtung zur Stromversorgung eines Fernsehgerätes mit den im Oberbegriff des Anspruchs 1 angegebenen Merkmalen.

Eine derartige Einrichtung ist aus dem Deutschen Patent DE-B- 34 19 792 der Anmelderin bekannt.

Weiterhin ist es bereits bekannt (siehe Beilage der Grundig AG in AZ Nr. 197 vom 28.08.87, Seite VI), die in einem Solargenerator erzeugte Spannung unter Zwischenschaltung eines Ladereglers und eines Akkus (Batterie) dem Batterieeingang eines Fernsehgerätes als Versorgungsspannung zuzuführen.

Die Aufgabe der Erfindung besteht darin, eine Einrichtung der im Oberbegriff des Anspruchs angegebenen Art derart weiterzubilden, daß ein Laden der Batterie sowohl vom Versorgungsnetz als auch über den Solargenerator möglich ist.

Diese Aufgabe wird bei einer Einrichtung der im Oberbegriff des Anspruchs 1 angegebenen Art durch die im kennzeichnenden Teil des Anspruchs 1 angegebenen Merkmale gelöst.

Vorteilhafte Ausgestaltungen der Erfindung ergeben sich aus den Unteransprüchen.

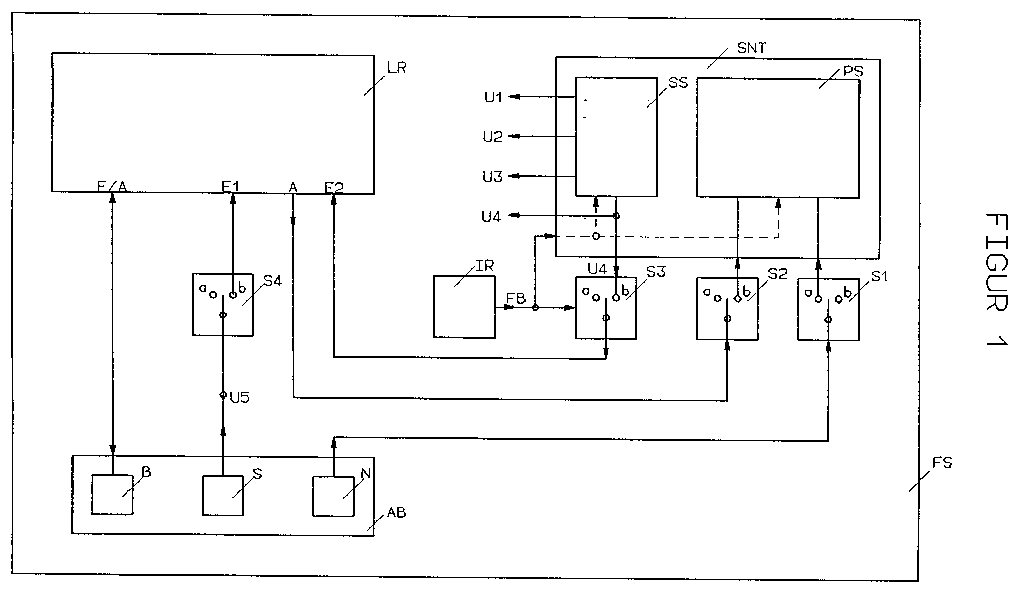

Die Vorteile der Erfindung bestehen unter anderem darin, daß es zum Laden der Batterie nicht notwendig ist, die Batterie aus dem Fernsehgerät zu entfernen (bei Fernsehgeräten mit integrierter Batterie) bzw. die Batterie vom Batterieanschluß des Fernsehgerätes zu trennen (bei Fernsehgeräten mit extern angeordneter Batterie). Weitere vorteilhafte Eigenschaften ergeben sich aus Ausführungsbeispielen, welche im folgenden anhand der Figuren 1-3 näher erläuter werden.

Es zeigt
- Figur 1: ein erstes Ausführungsbeispiel für die Erfindung, bei dem die Batterie extern angeordnet ist,
- Figur 2: ein Beispiel für eine vorteilhafte Ausgestaltung der Anschlußbuchseneinheit AB von Figur 1, und
- Figur 3: ein zweites Ausführungsbeispiel für die Erfindung, bei dem die Batterie im Gehäuse des Fernsehgerätes angeordnet ist.

Das in Figur 1 gezeigte Fernsehgerät FS enthält eine Anschlußbuchseneinheit AB mit Anschlüssen N für eine Netzspannung, S für eine in einem Solargenerator erzeugte Gleichspannung und B für eine Batterie. Der Netzanschluß N ist über den Netzschalter S1 mit der Primärseite PS des Schaltnetzteils SNT verbunden. Der Solargeneratoranschluß S ist über einen Schalter S4 mit einem ersten Eingang E1 eines Laderegler LR verbunden. Der Batterieanschluß B, über den sowohl ein Laden als auch ein Entladen (im Sinne einer Stromversorgung des Fernsehgerätes) der Batterie möglich ist, ist an einen Eingangs-/Ausgangsanschluß E/A des Ladereglers LR angeschlossen. Der Laderegler LR besitzt ferner einen Ausgang A, welcher über einen Schalter S2 mit der Primärseite des Schaltnetzteils verbunden ist, und einen Eingang E2, welcher über einen Schalter S3 an die Sekundärseite SS des Schaltnetzteils angeschlossen ist. Die Sekundarseite SS des Schaltnetzteils SNT weist weiterhin Ausgänge für im Fernsehgerät üblicherweise benötigte Versorgungsspannungen U1, U2, U3 und U4 auf.

Im folgenden wird anhand einer Erläuterung verschiedener Betriebszustände die Funktionsweise der in der Figur 1 gezeigten Einrichtung näher erläutert:

Bei normalem Netzbetrieb befindet sich der Netzschalter S1 im eingeschalteten bzw. leitenden Zustand und die Schalter S2, S3 und S4 im ausgeschalteten Zustand.

Folglich liefert das Versorgungsnetz über den Schalter S1 Wechselstrom an die Primärseite PS des Schaltnetzteils SNT. Dieser wird dort auf grundsätzlich bekannte Weise verarbeitet, auf die Sekundärseite SS transformiert und steht nach Gleichrichtung an den sekundärseitigen Ausgängen des Schaltnetzteils in Form der Gleichspannungen U1, U2, U3 und U4 zur Versorgung verschiedener Baugruppen des Fernsehgerätes zur Verfügung.

Wird nun die Bereitschaftstaste der (nicht gezeichneten) Infrarot-Fernbedienung betätigt, so wird das vom Infrarotempfänger IR des Fernsehgerätes abgegebene Bereitschaftssteuersignal FB sowohl der (Primär- oder) Sekundärseite des Schaltnetzteils SNT zugeführt, um das Fernsehgerät in den Bereitschaftszustand zu bringen, als auch dem Schalter S3 zugeführt, um diesen in den leitenden Zustand zu bringen.

Im Bereitschaftszustand sind die Versorgungsspannungen U1, U2 und U3 entweder abgeschaltet oder auf einen für die Versorgung der zugehörigen Baugruppen nicht mehr ausreichenden Wert reduziert. Hingegen ist auch im Bereitschaftsbetrieb an einem sekundärseitigen Ausgang die (niedrige) Gleichspannung U4 abgreifbar.

Dies kann beispielsweise dadurch erreicht werden, daß das oben genannte Bereitschaftssteuersignal FB der Sekundärseite SS des Schaltnetzteils SNT zugeführt wird und dort die im Bereitschaftsbetrieb nicht erforderlichen Spannungen U1, U2 und U3 abgeschaltet werden. Die Spannung U4 hingegen bleibt erhalten und wird über den geschlossenen Schalter S3 dem Eingang E2 des Ladereglers LR und über den Anschluß E/A des Ladereglers LR und den Batterieanschluß B des Fernsehgerätes FS der Batterie zur Ladung derselben zugeführt (erster Ladebetriebszustand). Die Aufgabe des Ladereglers besteht darin, den Ladezustand der Batterie ständig zu überwachen und bei aufgeladener Batterie den Ladevorgang zu beenden.

Alternativ zu der vorbeschriebenen Möglichkeit ist es auch denkbar, daß das Bereitschaftssteuersignal FB ausschließlich zum Herbeiführen des Bereitschaftszustandes verwendet und der Ladevorgang im Bereitschaftsbetrieb durch einen vom Benutzer ausgelösten Schaltvorgang ausgelöst wird.

Im Batteriebetrieb ist der Batteriebetriebsschalter S2 geschlossen und die Schalter S1 und S3 geöffnet. Der Schalter S4 kann sowohl geöffnet als auch geschlossen sein, wie im folgenden erläutert wird:

Im normalen Batteriebetrieb ist der Schalter S4 geöffnet, so daß der Solargeneratoranschluß S vom Eingang E1 des Ladereglers LR getrennt ist. Der der Batterie entnommene Gleichstrom wird dem Anschluß E/A des Ladereglers LR zugeführt und über den Ausgang A des Ladereglers und den geschlossenen Schalter S2 der Primärseite des Schaltnetzteils SNT zugeführt. Im Schaltnetzteil erfolgt eine grundsätzlich bekannte Signalverarbeitung derart, daß an den sekundärseitigen Ausgängen die Gleichspannungen U1, U2, U3 und U4 zur Verfügung stehen. Die Aufgabe des Ladereglers besteht hier darin, den Ladezustand der Batterie ständig zu überwachen und bei einem vorgegebenen niedrigen Ladezustand der Batterie den Betrieb des Fernsehgerätes zu unterbrechen, um ein Tiefentladen der Batterie zu vermeiden. Im normalen Batteriebetrieb ist der Schalter S3 in vorteilhafter Weise derart elektrisch verriegelt, daß er nicht in den leitenden Zustand gebracht werden kann.

Bei normalem Batteriebetrieb wird folglich die gesamte im Fernsehgerät benötigte Energie aus der Batterie entnommen.

Im Batterie-/Solarbetrieb ist der Schalter S4 geschlossen, so daß der Solargeneratoranschluß S und damit der angeschlossene Solargenerator mit dem Eingang E1 des Ladereglers LR verbunden ist. Damit liegt prinzipiell eine Parallelschaltung der Energiequelle Batterie mit der Energiequelle Solargenerator vor, so daß die vom Fernsehgerät benötigte Energie nicht ausschließlich aus der Batterie stammt. Das hat den Vorteil, daß die Betriebszeit des Fernsehgerätes im Vergleich zum normalen Batteriebetrieb verlängert ist.

In einem zweiten Ladebetriebszustand wird bei geöffneten Schaltern S1, S2 und S3 der Schalter S4 geschlossen. Dadurch wird der im Solargnerator erzeugte Gleichstrom über den Schalter S4 dem Eingang E1 des Ladereglers LR und über den Anschluß E/A des Ladereglers LR und den Batterieanschluß B des Fernsehgerätes FS der Batterie zur Ladung derselben zugeführt. Die Aufgabe des Ladereglers besteht auch hierbei darin, den Ladezustand der Batterie ständig zu überwachen und bei aufgeladener Batterie den Ladevorgang zu beenden.

Bei diesem zweiten Ladebetriebszustand wird folglich die Batterie vom Solargenerator unter Zwischenschaltung des Fernsehgerätes aufgeladen.

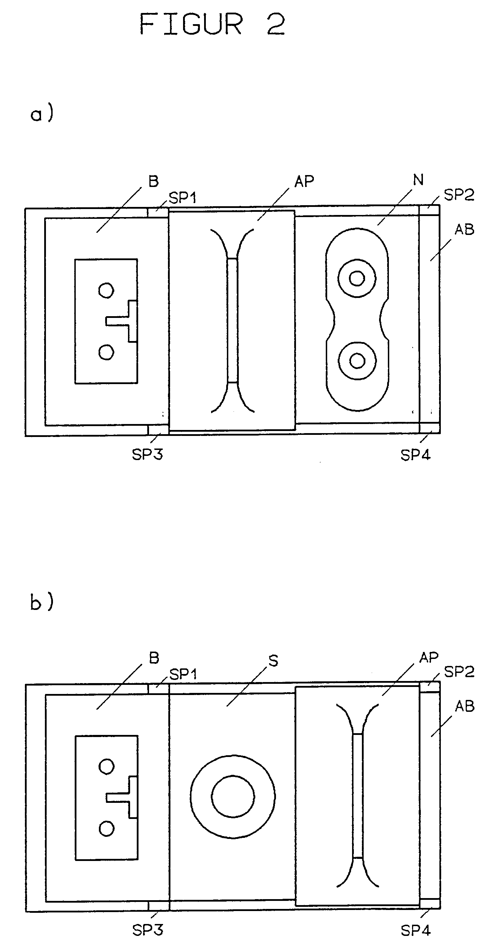

Die Figur 2 zeigt ein Beispiel für eine vorteilhafte Ausgestaltung der Anschlußbuchseneinheit AB von Figur 1

Die Anschlußbuchseneinheit AB weist eine erste Anschlußbuchse B für eine externe Batterie, eine zweite Anschlußbuchse S für einen Solargenerator und eine dritte Anschlußbuchse N für das Stromversorgungsnetz auf. In vorteilhafter Weise sind die Anschlußbuchsen S und N mittels einer verschiebbaren Abdeckplatte AP, die einen hervorstehenden Griff aufweist, gegeneinander derart verriegelt, daß nur eine in ihnen zugänglich ist. Die verschiebbare Abdeckplatte ist mit dem Schalter S2 (siehe Figur 1) derart gekoppelt, daß dann, wenn die

Netzanschlußbuchse N zugänglich ist (siehe Figur 2a) der Schalter S2 stets geöffnet ist. Dadurch wird sicher verhindert, daß bei Netzbetrieb Netzpotential über die Primärseite des Schaltnetzteils und den möglicherweise aufgrund eines Defektes fälschlicherweise geschlossenen Schalter S2 an den Batterie- oder Solargeneratoranschluß gelangen kann. Die Anschlußbuchseneinheit AB weist ferner Sperrzapfen SP1, SP2, SP3 und SP4 auf, welche den Verschiebebereich der Abdeckplatte derart begrenzen, daß die gewünschte alternative Zugänglichkeit von Netz- und Solargeneratoranschlußbuchse sichergestellt ist.

In Figur 2b ist die Abdeckplatte AP derart verschoben, daß die Solargeneratoranschlußbuchse S zugänglich ist.

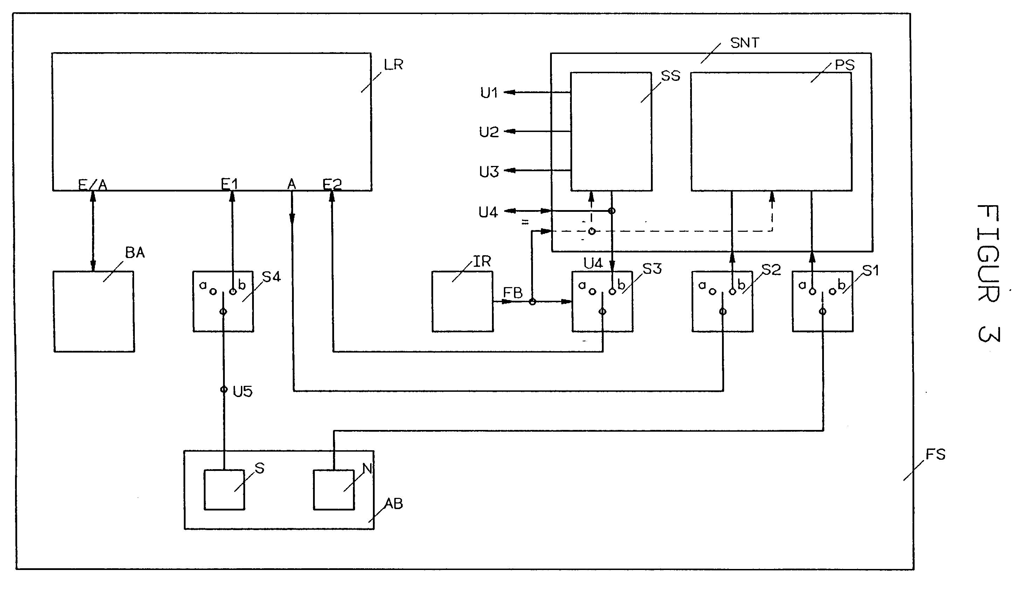

Die Figur 3 zeigt ein zweites Ausführungsbeispiel für die Erfindung, bei dem die Batterie BA im Gehäuse des Fernsehgerätes FS angeordnet ist. Bei diesem Ausführungsbeispiel weist die Anschlußbuchseneinheit AB nur die Anschlußbuchsen N für das Stromversorgungsnetz und S für einen Solargenerator auf, die - wie es bereits im Zusammenhang mit der Figur 2 beschrieben wurde - in vorteilhafter Weise mittels einer verschiebbaren Abdeckplatte derart gegeneinander verriegelt sind, daß nur eine von ihnen zugänglich ist. Zur Erläuterung der einzelnen Betriebszustände wird auf die Beschreibung zur Figur 1 verwiesen.

## Patentansprüche

1. Einrichtung zur Stromversorgung eines Fernsehgerätes wahlweise von einem Stromversorgungsnetz oder einer Batterie, mit einem Schaltnetzteil, dessen Primärseite bei Netzbetrieb mit dem Stromversorgungsnetz und bei Batteriebetrieb mit der Batterie verbunden ist, und welches an seinen sekundärseitigen Ausgängen die Versorgungsspannungen für das Fernsehgerät zur Verfügung stellt,
**dadurch gekennzeichnet**, daß
- das Fernsehgerät (FS) einen Laderegler (LR) und einen Anschluß (S) für einen Solargenerator enthält, und
- in einem ersten Ladebetriebszustand von der Sekundärseite (SS) des Schaltnetzteils (SNT) des Fernsehgerätes (FS) eine Gleichspannung (U4) abgeleitet und über den Laderegler (LR) der Batterie zugeführt, und
- der erste Ladebetriebszustand bei geschlossenem Netzschalter (S1) durch die Umschaltung des Fernsehgerätes (FS) in den Bereitschaftsbetrieb ausgelöst wird, in welchem die für diesen Ladebetriebszustand nicht benötigten Versorgungsspannungen (U1, U2, U3) des Fernsehgerätes abgeschaltet oder auf einen für die Versorgung der zugehörigen Baugruppen nicht mehr ausreichenden Wert reduziert sind, und daß bei Verlassen dieses Bereitschaftsbetriebes der erste Ladebetriebszustand beendet wird, und
- in einem zweiten Ladebetriebszustand eine am Solargeneratoranschluß (S) anliegende und von einem Solargenerator erzeugte Gleichspannung (U5) über den Laderegler (LR) der Batterie zugeführt wird.

2. Einrichtung nach Anspruch 1, **dadurch gekennzeichnet**, daß die Batterie im Gehäuse des Fernsehgerätes (FS) angeordnet ist.

3. Einrichtung nach Anspruch 1, **dadurch gekennzeichnet**, daß die Batterie außerhalb des Gehäuses des Fernsehgerätes (FS) angeordnet und an einen Batterieanschluß (B) des Fernsehgerätes (FS) angeschlossen ist.

4. Einrichtung nach einem oder mehreren der Ansprüche 1-3, **dadurch gekennzeichnet**, daß der erste Ladebetriebszustand bei geschlossenem Netzschalter (S1) im Bereitschaftsbetrieb durch einen vom Benutzer ausgelösten Schaltvorgang ausgelöst wird.

5. Einrichtung nach Anspruch 4, **dadurch gekennzeichnet**, daß ein zwischen der Sekundärseite (SS) des Netzteils (SNT) und dem Laderegler (LR) angeordneter Schalter (S3) geschlossen wird.

6. Einrichtung nach einem oder mehreren der Ansprüche 1-3, **dadurch gekennzeichnet**, daß der zweite Ladebetriebszustand bei geöffnetem Netzschalter (S1) durch die Umschaltung eines zwischen dem Solargeneratoranschluß (S) und dem Laderegler (LR) angeordneten Schalter (S4) in den leitenden Zustand ausgelöst wird.

7. Einrichtung nach den Ansprüchen 5 und 6, **dadurch gekennzeichnet**, daß der Schalter (S4) immer dann sperrt, wenn der Schalter (S3) leitet, und umgekehrt.

8. Einrichtung nach einem oder mehreren der vorhergehenden Ansprüche, **dadurch gekennzeichnet**, daß
- die Netzanschlußbuchse (N) und die Solargeneratoranschlußbuchse (S) mittels einer verschiebbaren Abdeckplatte (AP) derart gegeneinander verriegelbar sind, daß nur eine von ihnen zugänglich ist, und
- die verschiebbare Abdeckplatte (AP) derart mit dem Batteriebetriebsschalter (S2) gekoppelt ist, daß dieser bei zugänglicher Netzanschlußbuchse (N) geöffnet ist.

## Claims

1. Device for supplying a television set with power optionally from a power supply system or from a battery, comprising a switched-mode power supply, the primary side of which is connected to the power supply system in the case of mains operation and to the battery in the case of battery operation, and which provides the supply voltages to the television set at the outputs on its secondary side, characterised in that
- the television set (FS) contains a charge controller (LR) and a connection (S) for a solar generator, and
- a direct voltage (U4) is derived from the secondary side (SS) of the switched-mode power supply (SNT) of the television set (FS) in a first state of charging operation and is supplied to the battery via the charge controller (LR), and
- the first state of charging operation is triggered by the television set (FS) being switched to standby mode with the mains switch (S1) closed, in which mode the supply voltages (U1, U2, U3) of the television set, which are not needed for this state of charging operation, are disconnected or are reduced to a value no longer sufficient for supplying the associated assemblies, and that when this stand-by mode is left, the first state of charging operation is ended, and
- a direct voltage (U5) present at the solar generator connection (S) and generated by a solar generator is supplied to the battery via the charge controller (LR) in a second state of charging operation.

2. Device according to Claim 1, characterised in that the battery is arranged in the housing of the television set (FS).

3. Device according to Claim 1, characterised in that the battery is arranged outside the housing of the television set (FS) and is connected to a battery terminal (B) of the television set (FS).

4. Device according to one or more of Claims 1-3, characterised in that the first state of charging operation is triggered by a switching process, triggered by the user, in stand-by mode with the mains switch (S1) closed.

5. Device according to Claim 4, characterised in that a switch (S3) arranged between the secondary side (SS) of the power supply (SNT) and the charge controller (LR) is closed.

6. Device according to one or more of Claims 1-3, characterised in that the second state of charging operation is triggered by switching a switch (S4), arranged between the solar generator connection (S) and the charge controller (LR), into the conducting state with the mains switch (S1) opened.

7. Device according to Claims 5 and 6, characterised in that the switch (S4) is cut off whenever the switch (S3) conducts, and conversely.

8. Device according to one or more of the preceding claims, characterised in that
- the mains connection socket (N) and the solar generator connection socket (S) can be interlocked with respect to one another by means of a displaceable cover plate (AP) in such a manner that only one of them is accessible, and
- the displaceable cover plate (AP) is coupled to the battery operating switch (S2) in such a manner that the latter is opened when the mains connection socket (N) is accessible.

## Revendications

1. Dispositif d'alimentation en courant d'un récepteur de télévision au choix à partir d'un réseau d'alimentation en courant ou d'une batterie, comportant une alimentation à découpage, dont le côté primaire est raccordé au réseau d'alimentation en courant dans le cas du fonctionnement sur le réseau, et à la batterie, dans le cas d'un fonctionnement sur batterie, et qui fournit, au niveau de ses sorties côté secondaire, les tensions d'alimentation pour l'appareil de télévision,
caractérisé par le fait que
- l'appareil de télévision (FS) contient un régulateur de charge (LR) et une borne (S) pour une pile solaire, et
- dans un premier état de fonctionnement de charge, une tension continue (U4) est tirée du côté secondaire (SS) de l'alimentation à découpage (SNT) de l'appareil de télévision (FS) et est envoyée à la batterie par l'intermédiaire du régulateur de charge (LR), et
- le premier état de fonctionnement de charge est déclenché, alors que l'interrupteur (S1) de raccordement du réseau est fermé, au moyen de la commutation de l'appareil de télévision (FS) sur le fonctionnement en attente, dans lequel les tensions d'alimentation (U1,U2,U3) de l'appareil de télévision, qui ne sont pas nécessaires pour cet état de fonctionnement de charge, sont interrompues ou réduites à une valeur qui n'est plus suffisante pour l'alimentation des modules associés, le premier état de fonctionnement de charge étant terminé lorsque l'on sort de ce fonctionnement en attente, et
- dans un second état de fonctionnement de charge, une tension continue (U5) appliquée à la borne (S) de la pile solaire et produite par une pile solaire est envoyée à la batterie par l'intermédiaire du régulateur de charge (LR).

2. Dispositif selon la revendication 1, caractérisé en ce que la batterie est disposée dans le boîtier de l'appareil de télévision (FS).

3. Dispositif selon la revendication 1, caractérisé en ce que la batterie est disposée à l'extérieur du boîtier de l'appareil de télévision (FS) et est raccordée à une borne (B), prévue pour la batterie, de l'appareil de télévision (FS).

4. Dispositif selon une ou plusieurs des revendications 1-3, caractérisé en ce que le premier état de fonctionnement de charge, dans lequel l'interrupteur (S1) de raccordement au réseau est fermé, est déclenché dans le fonctionnement en attente, par une opération de commutation déclenchée par l'utilisateur.

5. Dispositif selon la revendication 4, caractérisé en ce qu'un interrupteur (S3), disposé entre le côté secondaire (SS) de l'alimentation à découpage (SNT) et le régulateur de charge (LR), est fermé.

6. Dispositif selon une ou plusieurs des revendications 1-3, caractérisé en ce que le second état de fonctionnement de charge, présent lorsque l'interrupteur (S1) de raccordement au réseau est ouvert, est déclenché par commutation d'un interrupteur (S4), qui est disposé entre la borne (S) de la pile solaire et le régulateur de charge (LR), dans l'état conducteur.

7. Dispositif selon les revendications 5 et 6, caractérisé en ce que l'interrupteur (S4) est toujours bloqué, lorsque l'interrupteur (S3) du conducteur, et inversement.

8. Dispositif selon une ou plusieurs des revendications précédentes, caractérisé en ce que
- la prise (N) de raccordement du réseau et la prise (S) de raccordement de la pile solaire peuvent être verrouillées l'une par rapport à l'autre au moyen d'une plaque de fermeture coulissante (AP) de telle sorte que seule l'une de ces prises est accessibles, et
- la plaque coulissante de fermeture (AP) est accouplée à l'interrupteur (S2) de fonctionnement de la batterie de telle sorte que ce dernier est ouvert lorsque la prise (N) de raccordement du réseau est accessible.
